# EUROPEAN PATENT APPLICATION

(11) **EP 3 754 771 A1**
(43) Date of publication of application: **23.12.2020**
(21) Application number: 18906170.8
(22) Date of filing: 20.12.2018
(51) Int. Cl.: H01M 10/04, H01M 10/0587, H01M 2/26, H01M 4/66, H01M 4/38, B23K 26/21, B23K 101/38

(54) **ELECTRODE ASSEMBLY AND SECONDARY BATTERY COMPRISING SAME**

(30) Priority: 14.02.2018 KR 20180018517
(71) Applicant: Samsung SDI Co., Ltd., Gyeonggi-do 17084 (KR)
(72) Inventor: JEONG, Hyun Ki, Yongin-si, Gyeonggi-do 17084 (KR)
(74) Representative: Shearman, James Ward
(86) International application number: PCT/KR2018/016380
(87) International publication number: WO 2019/160236

(57) **Abstract**

The present invention relates to an electrode assembly and a secondary battery comprising same. Since an anode tab and a cathode tab are welded to a plurality of anode uncoated portions and a plurality of cathode uncoated portions of the electrode assembly to serve as a current collector plate, the present invention can prevent a roundness decrease, deformation, etc., which can be caused by expansion of a silicon-based anode active material that is applied for high capacitance, and at the same time, promotes high power output and low resistance. To this end, the present invention relates to an electrode assembly comprising: a cathode plate to which a cathode tab is attached; an anode plate to which an anode tab is attached; and a separator interposed between the cathode plate and the anode plate, the electrode assembly being wound while the cathode plate, the separator, and the anode plate are laminated, wherein the cathode plate protrudes more upward than the separator and the anode plate so as to be exposed through an upper surface of the electrode assembly, and the anode plate protrudes more downward than the separator and the cathode plate so as to be exposed through a bottom surface of the electrode assembly, wherein the cathode tab extends along the upper surface of the electrode assembly while in contact with the cathode plate exposed through the upper surface of the electrode assembly, and is welded to a plurality of cathode plates being contacted, and the anode tab extends along the bottom surface of the electrode assembly while in contact with the anode plate exposed through the bottom surface of the electrode assembly, and is welded to a plurality of anode plates being contacted.

## Description

### TECHNICAL FIELD

The present invention relates to relates to an electrode assembly and a secondary battery comprising the same.

### BACKGROUND ART

In general, a secondary battery is manufactured by accommodating an electrode assembly including a cathode plate, an anode plate, and a separator interposed between the two plates with an electrolyte in a case. The secondary battery can be charged and discharged, unlike a primary battery, which is not rechargeable. As technologies for mobile devices, such as mobile phones, notebook computers, or the like, are developed and production of the mobile devices increases, a demand for secondary batteries as energy sources is sharply increased. Recently, secondary batteries have been actively developed as alternative energy sources of fossil fuels for use in electric vehicles, hybrid vehicles, etc.

Currently commercially available secondary batteries include a nickel-cadmium (Ni-Cd) battery, a nickel-hydrogen (Ni-MH) battery, a nickel-zinc (Ni-Zn) battery, a lithium secondary battery, and so on. Specifically, the lithium secondary battery generates little memory effect, compared to a nickel-based secondary battery, making the lithium secondary battery capable of being freely charged and discharged, and has several advantages including a low self-discharge rate and a high-energy density. Accordingly, the lithium secondary battery is drawing increasing attention.

### DESCRIPTION OF EMBODIMENTS

### TECHNICAL PROBLEM

To overcome the problems of the prior art, the present invention provides an electrode assembly and a secondary battery comprising same. Since an anode tab and a cathode tab are welded to a plurality of anode uncoated portions and a plurality of cathode uncoated portions of the electrode assembly to serve as a current collector plate, the present invention can prevent a roundness decrease, deformation, etc., which can be caused by expansion of a silicon-based anode active material that is applied for high capacitance, and at the same time, promotes high power output and low resistance.

### SOLUTION TO PROBLEM

According to an aspect of the present invention, provided is an electrode assembly including a cathode plate to which a cathode tab is attached, an anode plate to which an anode tab is attached, and a separator interposed between the cathode plate and the anode plate, the electrode assembly being wound while the cathode plate, the separator, and the anode plate are laminated, wherein the cathode plate protrudes more upward than the separator and the anode plate so as to be exposed through an upper surface of the electrode assembly, and the anode plate protrudes more downward than the separator and the cathode plate so as to be exposed through a bottom surface of the electrode assembly, wherein the cathode tab extends along the upper surface of the electrode assembly while in contact with the cathode plate exposed through the upper surface of the electrode assembly, and is welded to a plurality of cathode plates being contacted, and the anode tab extends along the bottom surface of the electrode assembly while in contact with the anode plate exposed through the bottom surface of the electrode assembly, and is welded to a plurality of anode plates being contacted.

The cathode plate may include a cathode current collector plate which is a plate-shaped metal foil, and a cathode coating layer covering a first surface and a second surface of the cathode current collector plate, wherein the cathode current collector plate includes a first cathode uncoated portion without the cathode coating layer on the first surface and a second cathode uncoated portion without the cathode coating layer at a top portion in the lengthwise direction on both surfaces of the electrode assembly, wherein the second cathode uncoated portion is exposed to the upper surface of the electrode assembly.

The first cathode uncoated portion of the cathode plate may be provided at a center of the first surface of the cathode current collector plate.

The first cathode uncoated portion of the cathode plate may be provided at a winding trailing edge on the first surface of the cathode current collector plate.

The cathode tab may include a cathode fixing portion attached and welded to the first cathode uncoated portion on the first surface of the cathode current collector plate, a cathode extending portion bent from a top end of the cathode fixing portion and extending along the upper surface of the electrode assembly to then be welded to the second cathode uncoated portion, and a cathode protruding portion bent from the cathode extending portion and extending and protruding upward in the lengthwise direction of the electrode assembly.

The cathode extending portion may include a plurality of cathode welding portions laser-welded to the second cathode uncoated portion being in contact with the cathode extending portion at the second cathode uncoated portion exposed to the upper surface of the electrode assembly.

The anode plate may include an anode current collector plate formed of a plate-shaped metal foil, and an anode coating layer covering a first surface and a second surface of the anode current collector plate, wherein the anode current collector plate includes a first anode uncoated portion without the anode coating layer at a winding trailing edge of the first surface thereof, and a second anode uncoated portion without the anode coating layer at a bottom portion in the lengthwise direction on both surfaces of the electrode assembly, wherein the second anode uncoated portion is exposed to the bottom surface of the electrode assembly.

The anode tab may include an anode fixing portion attached and welded to the first anode uncoated portion of the first surface of the anode current collector plate, and an anode extending portion bent from the bottom end of the anode fixing portion and extending along the bottom surface of the electrode assembly to then be welded to the second anode uncoated portion.

The anode extending portion may include a plurality of anode welding portions laser-welded to the second anode uncoated portion being in contact with the anode extending portion at the second anode uncoated portion exposed to the bottom surface of the electrode assembly.

The anode coating layer may be a silicon-based anode active material.

The separator may extend and protrude more downward than the cathode plate in the lengthwise direction of the electrode assembly, while extending and protruding more upward than the anode platen in the lengthwise direction of the electrode assembly.

According to another aspect of the present invention, provided is a secondary battery including the electrode assembly including a cathode plate to which a cathode tab is attached, an anode plate to which an anode tab is attached, and a separator interposed between the cathode plate and the anode plate and wound while the cathode plate, the separator, and the anode plate are laminated, wherein the cathode plate protrudes more upward than the separator and the anode plate so as to be exposed through an upper surface of the electrode assembly, and the anode plate protrudes more downward than the separator and the cathode plate so as to be exposed through a bottom surface of the electrode assembly, wherein the cathode tab extends along the upper surface of the electrode assembly while in contact with the cathode plate exposed through the upper surface of the electrode assembly, and is welded to a plurality of cathode plates being contacted, and the anode tab extends along the bottom surface of the electrode assembly while in contact with the anode plate exposed through the bottom surface of the electrode assembly, and is welded to a plurality of anode plates being contacted, a case provided with an internal space and accommodating the electrode assembly and an electrolyte solution in the internal space, and a cap assembly coupled to a top portion of the case and sealing the case, wherein the anode tab welded to the bottom surface of the electrode assembly is welded to the bottom surface of the case by resistance welding.

The cathode tab may be bent and extend upward from a region welded to the top surface of the electrode assembly in the lengthwise direction of the electrode assembly to then be welded to the cap assembly.

### ADVANTAGEOUS EFFECTS OF DISCLOSURE

In the electrode assembly according to the present invention and the secondary battery comprising same, since an anode tab and a cathode tab are welded to a plurality of anode uncoated portions and a plurality of cathode uncoated portions of the electrode assembly to serve as a current collector plate, a roundness decrease, deformation, etc., which can be caused by expansion of a silicon-based anode active material that is applied for high capacitance, can be prevented and at the same time, high power output and low resistance can be promoted.

### BRIEF DESCRIPTION OF DRAWINGS

FIGS. 1A, 1B and 1C are a perspective view, an exploded perspective view and a longitudinal cross-sectional view of a secondary battery according to an embodiment.
FIGS. 2A and 2B are enlarged views illustrating portions 2A and 2B of FIG. 1C.
FIG. 3 shows an example of an exploded perspective view of an electrode assembly before being wound in the secondary battery shown in FIGS. 1A to 1C.
FIGS. 4A, 4B and 4C are a perspective view, a plan view and a rear view of the electrode assembly in the secondary battery shown in FIGS. 1A to 1C.
FIG. 5 shows another example of an exploded perspective view of an electrode assembly before being wound in the secondary battery shown in FIGS. 1A to 1C.

### MODE OF DISCLOSURE

Hereinafter, example embodiments of the present invention will be described in detail. Various embodiments of the present invention may be embodied in many different forms and should not be construed as being limited to the example embodiments set forth herein. Rather, these example embodiments of the invention are provided so that this invention will be thorough and complete and will convey inventive concepts of the invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprise" and/or "comprising" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the element or feature in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

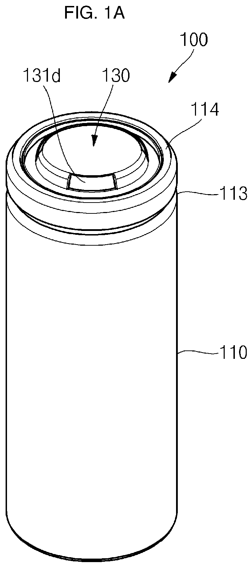

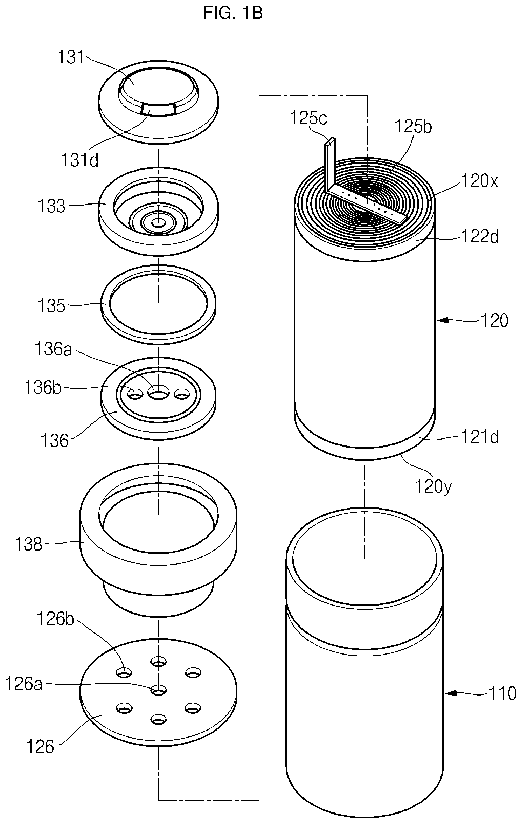

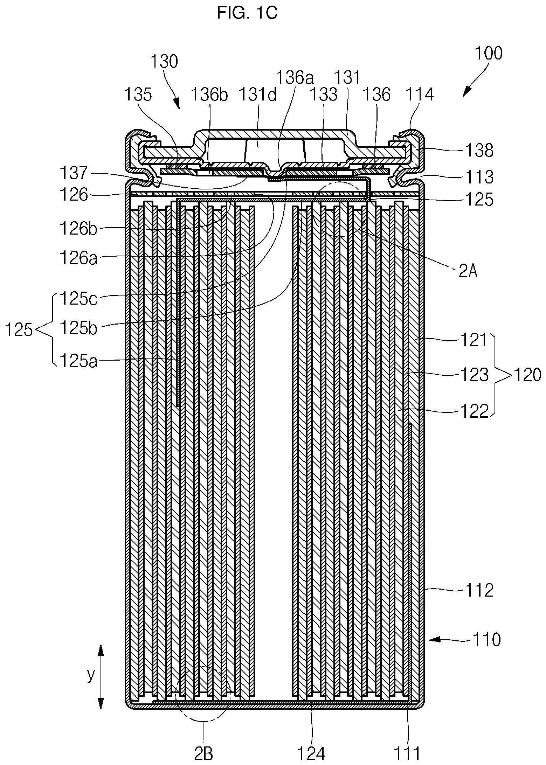

FIGS. 1A, 1B and 1C are a perspective view, an exploded perspective view and a longitudinal cross-sectional view of a secondary battery 100 according to an embodiment. Here, the longitudinal cross section refers to a cross section produced by cutting the secondary battery 100 in a lengthwise direction.

As shown in FIGS. 1A, 1B and 1C, the secondary battery 100 according to the present invention includes a case 110, an electrode assembly 120 accommodated in the case 110, and a cap assembly 130 sealing a top opening of the case 110.

The case 110 includes a circular bottom portion 111 and side portions 112 upwardly extending by a predetermined length from the bottom portion 111. In an embodiment, the secondary battery 100 is illustrated as a cylindrical secondary battery, but the present invention is not limited thereto. For example, a prismatic or pouch-type secondary battery may also be applied to the present invention. During the manufacture of the secondary battery 100, a top portion of the case 110 is in an opened state. Therefore, the electrode assembly 120 may be inserted into the case 110 together with an electrolyte solution for assembling the secondary battery 100. The case 110 may be made of steel, a steel alloy, aluminum, an aluminum alloy, or equivalents thereof, but the present invention is not limited thereto. Additionally, in order to prevent or substantially prevent the electrode assembly 120 from being deviated to the outside, an inwardly recessed beading part 113 may be formed at a bottom portion of the cap assembly 130 and an inwardly bent crimping part 114 may be formed at a top portion of the cap assembly 130.

The electrode assembly 120 is accommodated within the case 110 together with the electrolyte solution. In an embodiment, the electrolyte solution may be an organic solution containing a salt injected to allow lithium ions to move between a cathode plate and an anode plate of the electrode assembly 120. The electrolyte solution may include a nonaqueous organic electrolyte solution, which is a mixture of a lithium salt, such as LiPF6, LiBF4 or LiClO4, and a high-purity organic solvent, but embodiments of the present invention are not limited thereto.

The electrode assembly 120 includes an anode plate 121 coated with an anode active material, a cathode plate 122 coated with a cathode active material, and a separator 123 interposed between the anode plate 121 and the cathode plate 122 and allowing only lithium ions to move between the anode plate 121 and the cathode plate 122 while preventing or substantially preventing electrical shorts from occurring between the anode plate 121 and the cathode plate 122. After the anode plate 121, the cathode plate 122, and the separator 123, the electrode assembly 120, including laminated therein, is wound to have a substantially cylindrical shape. In addition, an anode tab 124 downwardly protruding by a predetermined length and extending may be attached to the anode plate 121, and a cathode tab 125 upwardly protruding by a predetermined length and extending may be attached to the cathode plate 122, or vice versa.

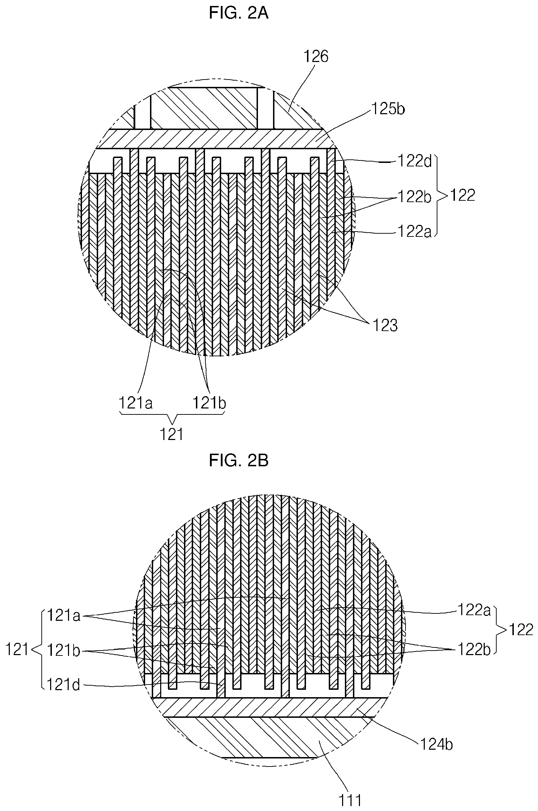

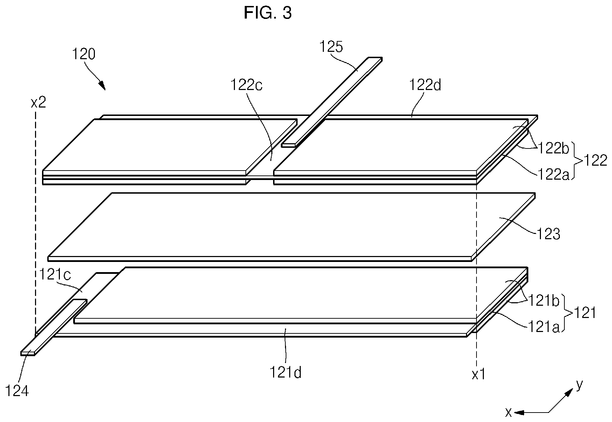

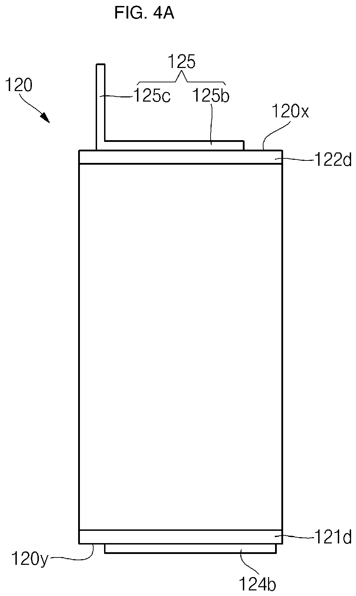

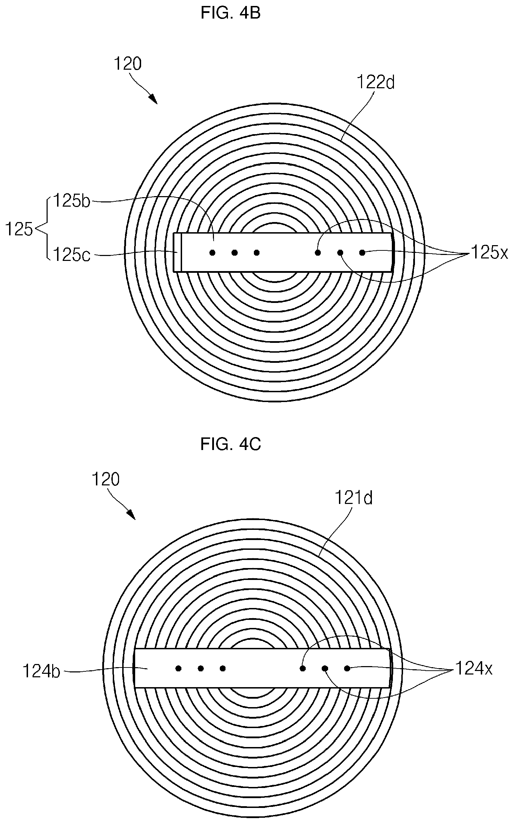

Next, referring to FIGS. 2A and 2B, enlarged views illustrating portions 2A and 2B of FIG. 1C are illustrated. In addition, referring to FIG. 3, an example of an exploded perspective view of an electrode assembly before being wound in the secondary battery shown in FIGS. 1A to 1C is illustrated. Referring to FIGS. 4A, 4B and 4C, a perspective view, a plan view and a rear view of the electrode assembly in the secondary battery shown in FIGS. 1A to 1C are illustrated. Hereinafter, configurations of an electrode assembly and a secondary battery according to an embodiment of the present invention will be described in further detail with reference to FIGS. 2A, 2B, 3, 4A, 4B, and 4C.

First, the anode plate 121 of the electrode assembly 120 includes an anode coating layer 121b formed by coating a silicon-based anode active material on both surfaces of an anode current collector plate 121a formed of copper (Cu) or nickel (Ni) plate-shaped metal foil. The anode plate 121 has an anode tab 124 attached to a first surface of the anode current collector plate 121a. The anode tab 124 includes an anode fixing portion 124a partially welded and attached to the anode current collector plate 121a and an anode extending portion 124b downwardly protruding by a predetermined length in the lengthwise direction of the electrode assembly 120.

The anode tab 124 may be attached to a region of a winding trailing edge x2 at the anode current collector plate 121a. In an embodiment, the winding trailing edge x2 may be positioned at the outermost portion of the electrode assembly 120, and a winding leading edge x1 may be positioned roughly at a center of the electrode assembly 120. That is, after laminating the cathode plate 121, the separator 123 and the cathode plate 122, the electrode assembly 120 may be wound from the leading edge x1 along a winding direction x to have a cylindrical shape.

In addition, the anode tab 124 is attached to the region of the trailing edge x2 of the anode current collector plate 121a. In addition, the anode tab 124 is attached to the first surface of the anode current collector plate 121a at the region of the trailing edge x2 so as to be spaced apart from the anode coating layer 121b. A first anode uncoated portion 121c without the anode coating layer 121b is provided at the anode current collector plate 121a having the anode tab 124 attached thereto. In addition, the anode current collector plate 121a further includes a first anode uncoated portion 121c without the anode coating layer 121b at a region corresponding to the anode tab 124 and a region corresponding to the region where the first anode uncoated portion 121c is provided, on a second surface opposite to the first surface to which the anode tab 124 is attached.

In addition, the anode current collector plate 121a may further include a second anode uncoated portion 121d without the anode coating layer 121b at a bottom portion in the lengthwise direction y on both surfaces of the anode current collector plate 121a. In addition, the second anode uncoated portion 121d may protrude more downward than the cathode plate 122 and the separator 123 from the electrode assembly 120. That is, the electrode assembly 120 may have the second anode uncoated portion 121d positioned on its bottom surface 120y. In addition, the separator 123 may extend and protrude more downward than the cathode plate 122 in the lengthwise direction y of the electrode assembly 120, thereby electrically insulating the cathode plate 121 and the cathode plate 122 from each other. In addition, the separator 123 of the electrode assembly 120 may serve to prevent the cathode plate 122 from electrically contacting the bottom portion 111 of the case 110.

In addition, the anode extending portion 124b of the anode tab 124 downwardly protruding from the bottom surface 120y of the electrode assembly 120 may be welded to the second anode uncoated portion 121d positioned on the bottom surface of the electrode assembly 120. The anode extending portion 124b of the anode tab 124 may be bent from the anode fixing portion 124a to then extend while being in contact with the bottom surface 120y of the electrode assembly 120, and thus may include an anode welding portion 124x that is welded to a plurality of second anode uncoated portions 121d by laser welding. That is, the anode tab 124 may serve as an anode current collector through a plurality of anode welding portions 124x welded to the second anode uncoated portions 121d. The anode tab 124 may be made of copper or nickel, but embodiments of the present invention are not limited thereto.

The cathode plate 122 includes a cathode coating layer 122b formed by coating an active material such as a transition metal oxide on both surfaces of a cathode current collector plate 122a formed of an aluminum (Al) plate-shaped metal foil. The cathode plate 122 has a cathode tab 125 attached to a first surface of the cathode current collector plate 122a. The cathode tab 125 includes a cathode fixing portion 125a partially welded and attached to the cathode current collector plate 122a and a cathode extending portion 125b upwardly protruding by a predetermined length in the lengthwise direction y of the electrode assembly 120.

The cathode tab 125 may be attached to a region positioned roughly at the center on the basis of the winding direction x at the cathode current collector plate 122a. In addition, the cathode tab 125 is attached to the first surface at a region of the center of the cathode current collector plate 122a so as to be spaced apart from the cathode coating layer 122b. A first cathode uncoated portion 122c without the cathode coating layer 122b is provided at the cathode current collector plate 122a having the cathode tab 125 attached thereto. In addition, the cathode current collector plate 122a further includes a first cathode uncoated portion 122c without the cathode coating layer 122b at a region corresponding to the cathode tab 125 and a region corresponding to the region where the first cathode uncoated portion 122c is provided on a second surface opposite to the first surface to which the cathode tab 125 is attached.

In addition, the cathode current collector plate 122a may further include a second cathode uncoated portion 122d without the cathode coating layer 122b at a top portion in the lengthwise direction y on both surfaces of the electrode assembly 120. In addition, the second cathode uncoated portion 122d may protrude from electrode assembly 120 more upward than the cathode plate 122 and the separator 123. That is, the electrode assembly 120 may have the second cathode uncoated portion 122d on the upper surface 120x thereof. In addition, the separator 123 of the electrode assembly 120 may extend and protrude more upward than the cathode plate 121 in the lengthwise direction y of the electrode assembly 120, thereby maintaining electrical insulation between the cathode plate 121 and the cathode plate 122.

In addition, the cathode extending portion 125b of the cathode tab 125 upwardly protruding from the upper surface 120x of the electrode assembly 120 may be welded to the second cathode uncoated portion 122d positioned on the bottom surface of the electrode assembly 120. The cathode extending portion 125b of the cathode tab 125 may be bent from the cathode fixing portion 125a to then extend while being in contact with the upper surface 120x of the electrode assembly 120, and thus may include a cathode welding portion 125x that is welded to a plurality of second cathode uncoated portions 122d by laser welding. That is, the cathode tab 125 may serve as a cathode current collector through the cathode welding portion 125x welded to the plurality of second cathode uncoated portions 122d.

In addition, the cathode tab 125 may further include a cathode protruding portion 125c bent from an end of the cathode extending portion 125b and upwardly protruding and extending from the electrode assembly 120. That is, the cathode tab 125 includes a cathode fixing portion 125a welded to the first cathode uncoated portion 122c of the cathode current collector plate 122a, a cathode protruding portion 125c upwardly protruding and extending from the upper surface 120x of the electrode assembly 120, and a cathode extending portion 125b connecting the cathode fixing portion 125a and the cathode protruding portion 125c and welded to the upper surface 120x of the electrode assembly 120. In addition, the cathode protruding portion 125c of the cathode tab 125 may be bent from the cathode extending portion 125b to be spaced apart from the upper surface 120x of the electrode assembly 120 and may then horizontally extend to then be welded to the cap assembly 130. The cathode tab 125 may be made of aluminum, but embodiments of the present invention are not limited thereto.

In addition, the anode extending portion 124b of the anode tab 124 of the electrode assembly 120 may be welded to the bottom portion 111 of the case 110. In an embodiment, after the electrode assembly 120 is inserted into the case 110, the anode extending portion 124b of the anode tab 124 may be welded to the bottom portion 111 of the case 110 by resistance welding. Therefore, the case 110 may operate as an anode. Conversely, the cathode tab 125 may be welded to the bottom portion 111 of the case 110 by resistance welding. In such a case, the case 110 may operate as a cathode.

In addition, an insulation plate 126, which is coupled to the case 110 and has a first hole 126a at its center and a plurality of second holes 126b at the exterior side of the first hole 126a, may be interposed between the electrode assembly 120 and the cap assembly 130. That is, the insulation plate 126 may be positioned on the electrode assembly 120. The insulation plate 126 may prevent the electrode assembly 120 from electrically contacting the cap assembly 130. Specifically, the insulation plate 126 may serve to prevent the cathode plate 121 of the electrode assembly 120 from electrically contacting the cap assembly 130. In an embodiment, the first hole 126a may allow a large amount of gas generated due to abnormality of the secondary battery to rapidly move toward the cap assembly 130, and some of the plurality of second holes 126b, through which the cathode tab 125 may pass, may allow the cathode tab 125 to be welded to the cap assembly 130. Additionally, the second holes 126b may allow an electrolyte solution to rapidly flow into the electrode assembly 120 during injection of the electrolyte solution. The electrolyte solution may function as a movement medium of lithium ions generated by an electrochemical reaction taking place at the cathode and anode plates of the secondary battery 100 during charging and discharging.

The cap assembly 130 includes a cap-up 131 having a plurality of through holes 131d formed therein, a safety plate 133 installed under the cap-up 131, a connection ring 135 installed under the safety plate 133, a cap-down 136 coupled to the connection ring 135 and having first and second through holes 136a and 136b formed therein, a sub-plate 137 fixed to a bottom portion of the cap-down 136 and welded and electrically connected to the cathode tab 125, and an insulation gasket 138 insulating the cap-up 131, the safety plate 133, the connection ring 135, and the cap-down 136 from the side portions 112 of the case 110.

In an embodiment, the insulation gasket 138 is compressed between the beading part 113 formed substantially at the side portion 111 of the case 110 and the crimping part 114. In addition, the through-holes 131d formed in the cap-up 131 and the through-hole 136b formed in the cap-down 136 may function to exhaust internal gases to the outside when an abnormal internal voltage is generated in the case 110. The safety plate 133 is first upwardly inverted by the internal voltage to be electrically disconnected from the sub-plate 137 and is then ruptured to thus release the internal gas to the outside.

In the electrode assembly and the secondary battery 100 including the same, since the anode tab 124 and the cathode tab 125 are welded to the plurality of second anode uncoated portions 121d and the plurality of second cathode uncoated portions 122d of the electrode assembly 120 to serve as a current collector plate, the present invention can prevent a roundness decrease, deformation, etc., which can be caused by expansion of a silicon-based anode active material that is applied for high capacitance, and at the same time, promotes high power output and low resistance.

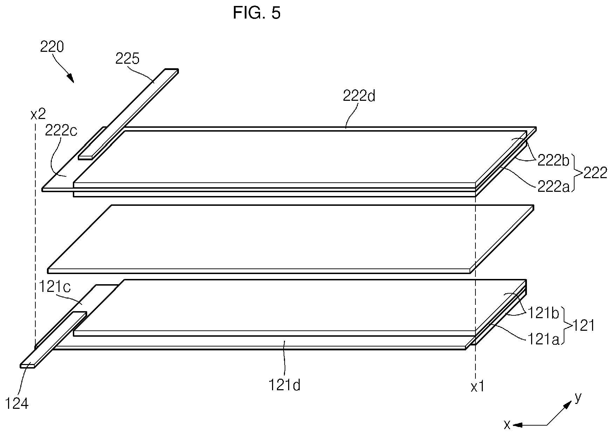

Additionally, referring to FIG. 5, another example of an exploded perspective view of an electrode assembly before being wound in the secondary battery shown in FIGS. 1A to 1C is illustrated. Hereinafter, configurations of an electrode assembly and a secondary battery according to the present invention will be described in further details. The electrode assembly 220 is the same as the electrode assembly 120 shown in FIG. 3 in terms of structures of the cathode plate 121, the separator 123 and the anode tab 124. The electrode assembly 220 is also the same as the electrode assembly 120 shown in FIG. 3 in terms of the connection relationship between the case 110 and the cap assembly 130 shown in FIGS. 1A, 1B, 1C, 2A and 2B.

Thus, the following description will focus on a cathode plate 222 and a cathode tab 225 of the electrode assembly 220, which are different from corresponding components of the electrode assembly 120. In addition, a perspective view, a plan view and a rear view of the electrode assembly 220 after being wound may be the same as those of the electrode assembly 120 shown in FIGS. 4A, 4B and 4C.

However, the electrode assembly 220 differs from the electrode assembly 120 shown in FIGS. 1A, 1B, 1C, 2A, 2B, 4A, 4B and 4C in that the cathode tab 225 upwardly protrudes from a trailing edge on the basis of a winding direction at the electrode assembly 220.

The cathode plate 222 includes a cathode coating layer 222b formed by coating an active material including a transition metal oxide on both surfaces of the cathode current collector plate 222a formed of a plate-shaped metal foil made of aluminum (Al). The cathode plate 222 has a cathode tab 225 attached to a first surface of the cathode current collector plate 222a. The cathode tab 225 includes a cathode fixing portion 225a partially welded and attached to the cathode current collector plate 222a and a cathode extending portion 225b upwardly protruding by a predetermined length in the lengthwise direction y of the electrode assembly 220.

The cathode tab 225 may be attached to a region of a winding trailing edge x2 at the cathode current collector plate 222a. Here, the winding trailing edge x2 may be positioned at an outermost portion of the electrode assembly 220, and the winding leading edge x1 may be positioned roughly at a center of the electrode assembly 220. That is, after laminating the cathode plate 121, the separator 123 and the cathode plate 222, the electrode assembly 220 may be wound from the winding leading edge x1 along the winding direction x to have a cylindrical shape.

In addition, the cathode tab 225 is attached to a first surface of the winding trailing edge x2 of the cathode current collector plate 222a so as to be spaced apart from the cathode coating layer 222b. In addition, a first cathode uncoated portion 222c without the cathode coating layer 222b is provided on the cathode current collector plate 222a having the cathode tab 225 attached thereto. In addition, the cathode current collector plate 222a further includes a first cathode uncoated portion 222c without the cathode coating layer 222b at a region corresponding to the cathode tab 225 and a region corresponding to the region where the first cathode uncoated portion 222c is provided on a second surface opposite to the first surface having the cathode tab 225 attached thereto.

In addition, the cathode current collector plate 222a further includes a second cathode uncoated portion 222d without the cathode coating layer 222b at a top portion in the lengthwise direction y on both surfaces of the electrode assembly 220. In addition, the second cathode uncoated portion 222d may protrude from the electrode assembly 220 more upward than the cathode plate 222 and the separator 123. That is, the electrode assembly 220 may have the second cathode uncoated portion 222d positioned on its upper surface. In addition, the separator 123 extend and protrude more upward than the anode plate 121 in the lengthwise direction y of the electrode assembly 220, thereby maintaining electrical insulation between the anode plate 121 and the cathode plate 222.

The cathode tab 225 protruding upward from the upper surface of the electrode assembly 220 may be welded to the second cathode uncoated portion 222d positioned on the bottom surface of the electrode assembly 220. The cathode tab 225 may extend while being in contact with the upper surface 220x of the electrode assembly 220 to then be welded to a plurality of second cathode uncoated portions 222d by laser welding. That is, the cathode tab 225 may be welded to the plurality of second cathode uncoated portions 222d, and thus may serve as a cathode current collector.

In the electrode assembly 220 and the secondary battery 100 including the same, since the anode tab 124 and the cathode tab 225 are welded to the plurality of second anode uncoated portions 121d and the plurality of second cathode uncoated portions 222d of the electrode assembly 120 to serve as a current collector plate, the present invention can prevent a roundness decrease, deformation, etc., which can be caused by expansion of a silicon-based anode active material that is applied for high capacitance, and at the same time, promotes high power output and low resistance.

While an electrode assembly and a secondary battery including the same according to the present invention have been particularly shown and described with reference to some exemplary embodiments thereof, it will be understood by those of ordinary skill in the art that various changes in form and details may be made therein without departing from the spirit and scope of the present invention as set forth in the following claims.

### INDUSTRIAL APPLICABILITY

The present invention relates to an electrode assembly and a secondary battery comprising same.

## Claims

1. An electrode assembly comprising:
a cathode plate to which a cathode tab is attached;
an anode plate to which an anode tab is attached; and
a separator interposed between the cathode plate and the anode plate, the electrode assembly being wound while the cathode plate, the separator, and the anode plate are laminated,
wherein the cathode plate protrudes more upward than the separator and the anode plate so as to be exposed through an upper surface of the electrode assembly, and the anode plate protrudes more downward than the separator and the cathode plate so as to be exposed through a bottom surface of the electrode assembly,
wherein the cathode tab extends along the upper surface of the electrode assembly while in contact with the cathode plate exposed through the upper surface of the electrode assembly, and is welded to a plurality of cathode plates being contacted, and the anode tab extends along the bottom surface of the electrode assembly while in contact with the anode plate exposed through the bottom surface of the electrode assembly, and is welded to a plurality of anode plates being contacted.

2. The electrode assembly of claim 1, wherein the cathode plate comprises:
a cathode current collector plate which is a plate-shaped metal foil; and
a cathode coating layer covering a first surface and a second surface of the cathode current collector plate,
wherein the cathode current collector plate includes a first cathode uncoated portion without the cathode coating layer on the first surface and a second cathode uncoated portion without the cathode coating layer at a top portion in the lengthwise direction on both surfaces of the electrode assembly, wherein the second cathode uncoated portion is exposed to the upper surface of the electrode assembly.

3. The electrode assembly of claim 2, wherein the first cathode uncoated portion of the cathode plate is provided at a center of the first surface of the cathode current collector plate.

4. The electrode assembly of claim 2, wherein the first cathode uncoated portion of the cathode plate is provided at a winding trailing edge on the first surface of the cathode current collector plate.

5. The electrode assembly of claim 2, wherein the cathode tab comprises:
a cathode fixing portion attached and welded to the first cathode uncoated portion on the first surface of the cathode current collector plate;
a cathode extending portion bent from a top end of the cathode fixing portion and extending along the upper surface of the electrode assembly to then be welded to the second cathode uncoated portion; and
a cathode protruding portion bent from the cathode extending portion and extending and protruding upward in the lengthwise direction of the electrode assembly.

6. The electrode assembly of claim 5, wherein the cathode extending portion includes a plurality of cathode welding portions laser-welded to the second cathode uncoated portion being in contact with the cathode extending portion at the second cathode uncoated portion exposed to the upper surface of the electrode assembly.

7. The electrode assembly of claim 1, wherein the anode plate comprises:
an anode current collector plate formed of a plate-shaped metal foil; and
an anode coating layer covering a first surface and a second surface of the anode current collector plate,
wherein the anode current collector plate includes a first anode uncoated portion without the anode coating layer at a winding trailing edge of the first surface thereof, and a second anode uncoated portion without the anode coating layer at a bottom portion in the lengthwise direction on both surfaces of the electrode assembly, wherein the second anode uncoated portion is exposed to the bottom surface of the electrode assembly.

8. The electrode assembly of claim 7, wherein the anode tab comprises:
an anode fixing portion attached and welded to the first anode uncoated portion of the first surface of the anode current collector plate; and
an anode extending portion bent from the bottom end of the anode fixing portion and extending along the bottom surface of the electrode assembly to then be welded to the second anode uncoated portion.

9. The electrode assembly of claim 8, wherein the anode extending portion includes a plurality of anode welding portions laser-welded to the second anode uncoated portion being in contact with the anode extending portion at the second anode uncoated portion exposed to the bottom surface of the electrode assembly.

10. The electrode assembly of claim 7, wherein the anode coating layer is a silicon-based anode active material.

11. The electrode assembly of claim 1, wherein the separator extends and protrudes more downward than the cathode plate in the lengthwise direction of the electrode assembly, while extending and protruding more upward than the anode platen in the lengthwise direction of the electrode assembly.

12. A secondary battery comprising:
the electrode assembly of one of claims 1 to 11;
a case provided with an internal space and accommodating the electrode assembly and an electrolyte solution in the internal space; and
a cap assembly coupled to a top portion of the case and sealing the case,
wherein the anode tab welded to the bottom surface of the electrode assembly is welded to the bottom surface of the case by resistance welding.

13. The secondary battery of claim 12, wherein the cathode tab bent and extending upward from a region welded to the top surface of the electrode assembly in the lengthwise direction of the electrode assembly to then be welded to the cap assembly.
